(19) Europäisches Patentamt
European Patent Office
Office européen des brevets

(11) Veröffentlichungsnummer: **0 034 747**
**B1**

(12) # EUROPÄISCHE PATENTSCHRIFT

(45) Veröffentlichungstag der Patentschrift: **14.03.84**

(51) Int. Cl.³: **C 08 F 36/18,** C 08 F 4/08

(21) Anmeldenummer: **81100918.2**

(22) Anmeldetag: **10.02.81**

(54) **Verfahren zur Polymerisation von mit Phenothiazinverbindungen stabilisiertem Chloropren.**

(30) Priorität: **23.02.80 DE 3006802**

(43) Veröffentlichungstag der Anmeldung:
**02.09.81 Patentblatt 81/35**

(45) Bekanntmachung des Hinweises auf die Patenterteilung:
**14.03.84 Patentblatt 84/11**

(84) Benannte Vertragsstaaten:
**DE FR GB**

(56) Entgegenhaltungen:
**DE - A - 2 650 342**
**DE - B - 1 097 689**
**FR - A - 2 089 381**
**GB - A - 1 427 727**
**US - A - 2 494 087**

(73) Patentinhaber: **BAYER AG, Konzernverwaltung RP Patentabteilung, D-5090 Leverkusen 1 Bayerwerk (DE)**

(72) Erfinder: **Casper, Rudolf, Dr., St. Ingberter Strasse 3, D-5090 Leverkusen (DE)**
Erfinder: **Wendling, Peter, Alkenrather Strasse 29, D-5090 Leverkusen 1 (DE)**
Erfinder: **Konter, Wolfgang, Dr., Espen Strasse 49, D-4040 Neuss 21 (DE)**
Erfinder: **Pampus, Gottfried, Dr., Friedrich Weskott Strasse 14, D-5090 Leverkusen (DE)**
Erfinder: **Hohmann, Gerhard, Dr., An der Steinrütsch 35, D-5090 Leverkusen (DE)**

**EP 0 034 747 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

# Verfahren zur Polymerisation von mit Phenothiazinverbindungen stabilisiertem Chloropren

Die Erfindung betrifft ein Verfahren zur Polymerisation von mit Phenothiazinverbindungen stabilisiertem Chloropren zu Polychloropren in wäßriger Emulsion in Gegenwart von Sauerstoff.

Es ist üblich, 2-Chlorbutadien (Chloropren) durch Zusatz von Stabilisatoren, wie Phenothiazin, gegen unkontrollierte und vorzeitige Polymerisation zu schützen.

Es ist erwünscht, diesen Stabilisator während der Polymerisation im Monomeren zu belassen, weil damit erhebliche Vorteile verbunden sind: Es entfällt dadurch die Notwendigkeit und das Risiko, den Stabilisator zu entfernen und das dabei erhaltene, unstabilisierte Chloropren tiefgekühlt aufzubewahren und streng vor Luftzutritt zu schützen.

Dem Fachmann ist nun bekannt, daß die radikalisch initiierte Emulsionspolymerisation von Chloropren in Anwesenheit von Stabilisatoren, wie z. B. Phenothiazin, die Polymerisation entweder gar nicht oder nur sehr verzögert gestartet werden kann. Zudem haben bereits realtiv geringe, technisch unvermeidbare Schwankungen des Stabilisatorgehaltes im Monomeren relativ große Schwankungen des Starts und einen ungleichmäßigen Verlauf der Polymerisation, und damit eine Verschlechterung der Produktqualität zur Folge.

Es ist auch bekannt, daß alle radikalisch initiierten Polymerisationsreaktionen bereits durch geringe Spuren von molekularem Sauerstoff stark inhibiert werden. Das hat den Nachteil, daß auch dadurch Verzögerungen des Polymerisationsbeginns sowie Umsatzschwankungen auftreten, die dazu führen, daß solche Polymerisationsprozesse technisch schwer beherrschbar sind. Außerdem haben diese Unregelmäßigkeiten bei der Polymerisation wiederum entsprechend nachteilige Schwankungen der Produktqualität zur Folge.

Eine bekannte Möglichkeit, molekularen Sauerstoff aus dem Polymerisationsansatz zu entfernen, besteht im Ausblasen sowie dem Überlagern der Reaktionsgefäße mit gereinigtem Stickstoff. Die wesentliche Schwierigkeit besteht dabei in der Bestimmung des Zeitpunktes bzw. der Stickstoffmenge, bei der die Sauerstoffkonzentration im Ansatz einen kritischen, d. h. für einen gleichmäßigen Polymerisationsverlauf unschädlichen Konzentrationswert, unterschritten hat. Dies hat zur Folge, daß zur Entfernung letzter Sauerstoffspuren technisch aufwendige Vorrichtungen, lange Spülzeiten sowie große Mengen an gereinigtem Stickstoff erforderlich sind. Unter Stickstoff wird beispielsweise gemäß FR-A-2 089 381 und DE-A-2 650 342 polymerisiert, wobei auch ein anderer Stabilisator Verwendung findet. Gemäß US-A-2 494 087 und GB-A-1 427 727 wird nicht mit Phenothiazin stabilisiert, sondern durch Zugabe dieser Substanz die Polymerisation abgebrochen.

Die Inhibition bzw. Störung der Polymerisation sowohl durch Stabilisatoren als auch durch molekularen Sauerstoff lassen sich in gewissen Grenzen dadurch überspielen, daß man relativ hohe Initiatormengen verwendet. Dies besitzt jedoch bekanntlich den Nachteil, daß die Rühr- bzw. Entgasungsstabilität der bei der Emulsionspolymerisation gebildeten Polymerdispersion wesentlich verschlechtert wird. Infolgedessen kommt es zu verstärkter Ausscheidung bzw. Anbackung von Polymerisat an den Wänden der Reaktionsgefäße und damit verbunden zu technischen Schwierigkeiten. Ferner steigt durch die infolge der höheren Initiatordosierung höhere Radikalkonzentration im Ansatz das Risiko für eine stärkere Verzweigung bzw. Vernetzung des Polymerisats, was wiederum zu einer Verschlechterung der Produktqualität führt.

Es ist literaturbekannt, daß die wäßrige Emulsionspolymerisation vieler Vinyl- und Dienmonomeren mit Hilfe sogenannter Redox-Initiatoren, bestehend aus Alkalisalzen reduzierender Sauerstoffsäuren des Schwefels, wie z. B. Natriumhydrogensulfat bzw. Natriumdithionit oder bestimmten Aminen wie z. B. Triethanolamin einerseits sowie Oxidationsmittel wie z. B. organische Peroxide, Hydroperoxide, Alkalisalze der Peroxidschwefelsäure bzw. der Peroxodiphosphorsäure andererseits, initiiert, werden kann (DE-OS 2 117 751, 2 462 354, DE-PS 926 091, CH-PS 248 487, DE-PS 968 233, US-PS 2 614 098). Die beschriebenen Redoxsysteme werden jedoch sowohl durch molekularen Sauerstoff und/oder durch zahlreiche Stabilisatoren mehr oder weniger stark inhibiert. So wird z. B. die mit Natriumdithionit/Kaliumperoxodisulfat aktivierte Emulsionspolymerisation von Vinylchlorid durch Phenothiazin vollständig unterbunden. Im System Chloropren/Triethanolamin/Kaliumperoxodisulfat (s. Beispiel 7a) wird die Emulsionspolymerisation durch beispielsweise 7 mg molekularen Sauerstoff (pro Liter wäßrige Phase vollständig verhindert.

Technisches Interesse für die Emulsionspolymerisation von Chloropren haben die Formamidinsulfinsäure [FAS] (DE-AS 1 037 689) sowie bestimmte FAS-haltige Initiatorkombinationen insbesondere deshalb erlangt, weil damit die technisch vorteilhafte Initiierung der Emulsionspolymerisation von Phenothiazin-stabilisiertem Chloropren ohne vorherige Abtrennung des Stabilisators möglich ist.

Nachteilig ist dabei jedoch, daß die Polymerisation durch molekularen Sauerstoff — abhängig von dessen Konzentration im Ansatz — stark verzögert wird, was zu schwankenden Umsätzen und technischen Schwierigkeiten sowie zu Schwankungen der Produktqualität führt.

Es wurde nun gefunden, daß eine praktisch momentan startende und außerordentlich gleichmäßige wäßrige Emulsionspolymerisation von Chloropren auch bei relativ hoher Konzentration von molekularem Sauerstoff und in Gegenwart relativ großer Mengen Phenothiazin mit insgesamt geringen Initiatormengen möglich ist, wenn man folgende Initiatorsysteme verwendet:

a) Natriumdithionit
b) Natriumdithionit/Formamidinsulfinsäure/Kaliumperoxodisulfat
c) Natriumdithionit/Kaliumperoxodisulfat/β-Anthrachinonsulfonsaures Natrium
d) Natriumdithionit/Kaliumperoxodisulfat/Formamidinsulfinsäure/β-Anthrachinonsulfonsaures Natrium
e) Natriumdithionit/Formamidinsulfinsäure
f) Natriumdithionit/Kaliumperoxodisulfat

Der störende Einfluß von molekularem Sauerstoff auf die Emulsionspolymerisation von Phenothiazin-stabilisiertem Chloropren wird durch den Zusatz von Natrium-Dithionit weitgehend eliminiert.

Bezogen auf 100 Gewichtsteile der zu polymerisierenden Monomeren werden 0,01 bis 0,3, bevorzugt 0,01 bis 0,15 Gewichtsteile des Natriumdithionits eingesetzt.

Werden als Polymerisationsinitiator Mischungen enthaltend Natriumdithionit eingesetzt, so beläuft sich das Gewichtsverhältnis der üblichen Initiatoren zu Natriumdithionit von 0,05–5 : 1, bevorzugt 0,1–3 : 1 Gewichtsteilen.

Werden als übliche Initiatoren eine Mischung von FAS und Kaliumperoxodisulfat verwendet, so beträgt deren Gewichtsverhältnis zueinander 1 : 10–10 : 1 Gewichtsteile. Gelangt eine Mischung aus Kaliumperoxodisulfat und Anthrachinon-β-sulfonsaures Natrium zum Einsatz so können diese Komponenten in dem Gewichtsverhältnis, wie es der US-PS 2 426 854 entnommen werden kann, eingesetzt werden. Das Gewichtsverhältnis von FAS/Kaliumperoxodisulfat und Anthrachino-β-sulfonsaures Natrium kann im Rahmen der Angaben in der DE-OS 2 650 342 variiert werden.

Als Emulgatoren können die bekannten anionischen, kationischen, nichtionischen und amphoteren oberflächenaktiven Verbindungen eingesetzt werden. Dies sind z. B.:

a) anionische
Alkalisalze der disproportionierten Abietinsäure, deren Herstellung in den US-Patentschriften 2 201 237 und 2 154 629 beschrieben ist. Alkalisalze und/oder ungesättigte $C_6$-$C_{25}$ Fettsäuren;
Alkalisalze von alkylierten oder nicht alkylierten Naphthalinsulfonsäuren, die mit Formaldehyd kondensiert wurden und deren Herstellung von R. S. Barrows und G. W. Scott in Ind. Eng. Chem. 40 (1948) 2193 beschrieben ist;
Alkylbenzolsulfate, Alkylbenzolsulfonate, Alkenolpolyoxyethylatsulfate, Alkoholisoäthionat, Sulfobernsteinsäureester, Alkalisalze der Sulfate aliphatisch alkylierter Phenole oder Naphthole.

b) kationische
quartäre Ammoniumhalogenide und quartäre carboxymethylierte Ammoniumhalogenide.

c) nichtionische
Ethylen- oder Propylenaddukte von Fettalkoholen, Fettsäure-, Fettsäureamiden, alkylierten oder nichtalkylierten Phenolen.

d) amphotere

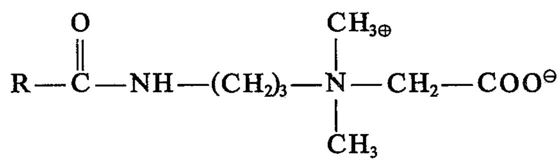

R = Alkylrest einer gesättigten oder ungesättigten, verzweigten oder unverzweigten $C_8-C_{18}$-Fettsäure.

Die Emulgatoren werden für sich allein oder kombiniert in solchen Mengen eingesetzt, die eine oberflächenaktive Wirkung gewährleisten. Die Mengen schwanken je nach Art der verwendeten Verbindungen und den gewählten Kombinationen der oberflächenaktiven Stoffe und dem pH-Bereich größenordnungsmäßig zwischen 2 und 6 Gew.-%, bezogen auf die eingesetzte Monomermenge.

Die Polymerisation kann im Temperaturbereich von 0 bis 70° C durchgeführt werden, wobei der Bereich von 0–55° C bevorzugt wird.

Das Monomere wird je nach vorgesehener Anwendung des Polymeren zwischen 50 und 99% umgesetzt, wobei für Kautschuke zur Erzielung vorteilhafter anwendungstechnischer Werte Umsätze zwischen 63 und 70% angemessen sind, während Latices, die zur Papierverfestigung oder zur Bitumenvergütung benötigt werden, mit einem hohen Umsatz — bis zu 99% — hergestellt werden.

Bei der Durchführung des Verfahrens kann Chloropren allein polymerisiert oder mit bis zu 60 Gew.-% einer anderen mit Chloropren copolymerisierbaren Verbindung, z. B. Acrylnitril, Methacrylnitril, α-Chloracrylnitril, Acrylsäureester, Methacrylsäureester, Vinylidenchlorid, Styrol, Vinyltoluole, Butadien-(1,3), 1-Chlorbutadien-(1,3), 2,3-Dichlorbutadien(1,3), 2-Chlor-3-methyl-butadien-(1,3), Schwefel polymerisiert werden.

Durch Zugabe bekannter, als Regler wirksamer Verbindungen, z. B. Mercaptane, Xanthogendisulfide, Chinone, Benzyljodid und Jodoform, lassen sich die Struktur und die Eigenschaften der Polymeren in weiten Grenzen variieren.

Nicht umgesetzte organische Verbindungen lassen sich durch Wasserdampfdestillation, beispielsweise bei 50° C und einem absoluten Druck von 26 mbar entfernen.

Durch die folgenden Beispiele soll die Erfindung näher erläutert werden, ohne sie jedoch zu beschränken.

Die in den Beispielen beschriebenen Polymerisationsversuche wurden zur Erzielung besonders definierter Reaktionsbedingungen in einem kontinuierlich betriebenen Rührkessel durchgeführt. Die mittlere Verweilzeit des Ansatzes im Rührkessel betrug 60 Minuten. Vergleichsversuche zeigten, daß analoge Ergebnisse sowohl bei diskontinuierlichen als auch bei halbkontinuierlichen (Zulaufverfahren) Ansätzen erhalten werden.

Alle Versuche wurden bei einer Temperatur von 10° C durchgeführt.

Das Monomere inclusive Stabilisator und Regler wurde in der Emulgatoren- und Ätznatron-enthaltenen wäßrigen Phase voremulgiert und gelangte dann in das Reaktionsgefäß, in das zusätzlich die wäßrigen Lösung(en) des (der) jeweils eingesetzten Oxidations- und/oder Reduktionsmittel bzw. gegebenenfalls des Coaktivators eindosiert wurden. Analoge Ergebnisse der Polymerisation werden auch dann erhalten, wenn ohne Voremulgierung gearbeitet wurde.

Nach dem Austritt aus dem Konti-Rührkessel wurde die Reaktion durch Zugabe von t-Butylbrenzcatechin bzw. Diäethylhydroxylamin und gleichzeitigem Entzug des Monomeren abgebrochen. Der Umsatz wurde jeweils nach 5 Verweilzeiten — das entspricht dem stationären Zustand der Anordnung — bestimmt.

Zum Vergleich wurden die Polymerisationsversuche jeweils einmal unter Sättigung der Monomerphase sowie des Hauptteils der wäßrigen Phase mit Luft und einmal durch vorheriges Ausblasen und Überlagern aller Reaktionslösungen mit hochgereinigtem Stickstoff durchgeführt.

Da die Beispiele nur zeigen sollen, wie die Chloroprenpolymerisation initiiert werden kann, wurden die Versuche frühzeitig abgebrochen. Der angegebene Umsatz ist daher gering. Wenn man in bekannter Weise auspolymerisiert, werden gewünschte Umsätze erhalten.

Es wurde eine Mischung folgender Grundzusammensetzung polymerisiert:

| | Gew.-Anteile |
|---|---|
| Chloropren | 100 |
| n-Dodecylmercaptan | 0,13 |
| Entsalztes Wasser | 160 |
| Natriumsalz einer disproportionierten Abietinsäure | 5,5 |
| Ätznatron | 0,77 |
| Natriumsalz des Kondensationsproduktes aus Naphthalinsulfonsäure und Formaldehyd | 1,0 |

Die Gewichtsanteile der weiteren Komponenten sind jeweils bei den einzelnen Beispielen in der folgenden Tabelle aufgeführt.

Tabelle 1

Beispiele zur Polymerisation gemäß dem Stand der Technik

| Beispiel Nr. | Stabilisatorgehalt des Monomeren (%) | Initiatorsystem (Gewichtsanteile pro 100 g Monomer) Komponente I | Komponente II | Komponente III | Umsatz (%) |
|---|---|---|---|---|---|
| 1 a[1]) | 0,015 PTZ[5]) | 0,02 FAS[2]) | – | – | 0 |
| b[1]) | 0,015 PTZ[5]) | 0,02 FAS | – | – | 9 |
| 2 a | 0,015 PTZ[5]) | 0,02 FAS | 0,075 PS[3]) | – | 0 |
| b | 0,015 PTZ[5]) | 0,02 FAS | 0,075 PS | – | 5 |
| 3 a | 0,015 PTZ[5]) | 0,02 FAS | – | 0,0075 SS[4]) | 0 |
| b | 0,015 PTZ[5]) | 0,02 FAS | – | 0,0075 SS | 2 |
| 4 a | 0,015 PTZ[5]) | 0,02 FAS | 0,075 PS | 0,0075 SS | 9 |
| b | 0,015 PTZ[5]) | 0,02 FAS | 0,075 PS | 0,0075 SS | 33 |
| 5 a | 0,015 PTZ[5]) | 0,06 FAS | 0,075 PS | 0,0075 SS | 19 |
| b | 0,015 PTZ[5]) | 0,06 FAS | 0,075 PS | 0,0075 SS | 35 |

Tabelle 1 (Fortsetzung)

| Beispiel Nr. | Stabilisatorgehalt des Monomeren (%) | Komponente I | Initiatorsystem (Gewichtsanteile pro 100 g Monomer) Komponente I | Komponente III | Komponente IV | Umsatz (%) |
|---|---|---|---|---|---|---|
| 6 a | 0,015 PTZ[5]) | 0,02 FAS | 0,038 Na-Bisulfit | 0,075 PS | 0,0075 SS | 14 |
| b | 0,015 PTZ[5]) | 0,02 FAS | 0,038 Na-Bisulfit | 0,075 PS | 0,0075 SS | 30 |
| 7 a | 0,015 PTZ[5]) | – | 0,48 Triethanolamin | 0,24 PS | – | 0 |
| b | 0,015 PTZ[5]) | – | 0,48 Triethanolamin | 0,24 PS | – | 22 |
| 9 b | 0,3 PTZ | – | 0,02 FAS | 0,075 PS | 0,0075 SS | 17 |
| 10 b | 0,2 TBC[5]) | – | 0,02 FAS | 0,075 PS | 0,0075 SS | 0 |

[1]) a = Sauerstoffsättigung
b = Sauerstoffausschluß

[2]) FAS = Formamidinsulfinsäure

[3]) PS = Kaliumperoxodisulfit

[4]) SS = Antrachinon-β-sulfonsaures Natrium (»Silbersalz«)

[5]) PTZ = Phenothiazin;
TBC = t-Butylbrenzcatechin

Tabelle 2

Beispiele zur Polymerisation mit den erfindungsgemäßen Initiatorsystemen

| Beispiel Nr. | Stabilisator-gehalt des Monomeren (%) | Initiatorsystem (Gewichtsteile pro 100 g Monomer) | | | | Umsatz (%) |
|---|---|---|---|---|---|---|
| | | Komponente I | Komponente II | Komponente III | Komponente IV | |
| 10 a | 0,015 | 0,02 FAS | – | – | 0,064 Na-Dithionit | 12 |
| 11 a | 0,015 | 0,02 FAS | 0,075 PS | – | 0,064 Na-Dithionit | 32 |
| 12 a | 0,015 | 0,02 FAS | – | 0,0075 SS | 0,064 Na-Dithionit | 19 |
| 13 a | 0,015 | 0,02 FAS | 0,075 PS | 0,0075 SS | 0,064 Na-Dithionit | 37 |
| 14 a | 0,015 | – | 0,075 PS | – | 0,032 Na-Dithionit | 17 |
| 15 a | 0,015 | – | 0,075 PS | 0,0075 SS | 0,032 Na-Dithionit | 24 |
| 16 a | 0,015 | – | 0,075 PS | – | 0,064 Na-Dithionit | 31 |
| 17 a | 0,015 | – | 0,075 PS | 0,0075 SS | 0,064 Na-Dithionit | 30 |
| 18 a | 0,015 | – | – | – | 0,064 Na-Dithionit | 3 |
| 19 a | 0,3 PTZ | – | 0,075 PS | – | 0,064 Na-Dithionit | 27 |

**Patentansprüche**

1. Verfahren zur Polymerisation von mit Phenothiazinverbindungen stabilisiertem Chloropren in wäßriger Emulsion in Gegenwart von Sauerstoff, dadurch gekennzeichnet, daß man einen Polymerisationsinitiator aus

a) Natriumdithionit,
b) Natriumdithionit, Formamidinsulfinsäure und Kaliumperoxodisulfat,
c) Natriumdithionit, Kaliumperoxodisulfat und Anthrachino-$\beta$-sulfonsaurem Natrium,
d) Natriumdithionit, Formamidinsulfinsäure, Kaliumperoxodisulfat und Anthrachino-$\beta$-sulfonsaurem Natrium,
e) Natriumdithionit und Formamidinsulfonsäure oder
f) Natriumdithionit und Kaliumperoxodisulfat

verwendet.

2. Verfahren nach Anspruch 1, dadurch gekennzeichnet, daß man 0,01 bis 0,3 Gew.-% Natriumdithionit bezogen auf Monomer verwendet.

3. Verfahren nach Anspruch 1, dadurch gekennzeichnet, daß man 0,01 bis 0,15 Gew.-% Natriumdithionit bezogen auf Monomer verwendet.

**Claims**

1. Process for the polymerisation of chloroprene stabilised with phenothiazine compounds in an aqueous emulsion in the presence of oxygen, characterised in that a polymerisation initiator of

a) sodium dithionite,
b) sodium dithionite, formamidine sulphinic acid and potassium peroxodisulphate,
c) sodium dithionite, potassium peroxodisulphate and sodium anthraquinone $\beta$-sulphonate,
d) sodium dithionite, formamidine sulphinic acid, potassium peroxodisulphate and sodium anthraquinone $\beta$-sulphonate,
e) sodium dithionite and formamidine sulphinic acid or
f) sodium dithionite and potassium peroxodisulphate

is used.

2. Process according to Claim 1, characterised in that 0.01 to 0.3% by weight of sodium dithionite is used based on the monomer.

3. Process according to Claim 1, characterised in that 0.01 to 0.15% by weight of sodium dithionite is used based on the monomer.

**Revendications**

1. Procédé de polymérisation de chloroprène stabilisé avec des composés de phénothiazine en émulsion aqueuse en présence d'oxygène, caractérisé en ce qu'on utilise un initiateur de polymérisation constitué par

a) du dithionite de sodium,
b) du dithionite de sodium, de l'acide formamidinosulfinique et de peroxodisulfate de potassium,
c) du dithionite de sodium, du peroxodisulfate de potassium et de l'anthraquino-$\beta$-sulfonate de sodium,
d) du dithionite de sodium, de l'acide formamidinosulfinique, du peroxodisulfate de potassium et de l'anthraquino-$\beta$-sulfonate de sodium,
e) du dithionite de sodium et de l'acide formamidinosulfinique ou
f) du dithionite de sodium et du peroxodisulfate de potassium.

2. Procédé suivant la revendication 1, caractérisé en ce qu'on utilise 0,01 à 0,3% en poids de dithionite de sodium par rapport au monomère.

3. Procédé suivant la revendication 1, caractérisé en ce qu'on utilise 0,01 à 0,15% en poids de dithionite de sodium par rapport au monomère.